# EUROPÄISCHE PATENTSCHRIFT

(11) **EP 3 965 951 B1**
(45) Veröffentlichungstag und Bekanntmachung des Hinweises auf die Patenterteilung: **16.07.2025**
(21) Anmeldenummer: 20724437.7
(22) Anmeldetag: 04.05.2020
(51) Int. Cl.: B05B 12/00

(54) **BESCHICHTUNGSVERFAHREN UND ENTSPRECHENDE BESCHICHTUNGSANLAGE**
COATING METHOD AND CORRESPONDING COATING INSTALLATION
PROCÉDÉ DE REVÊTEMENT ET INSTALLATION DE REVÊTEMENT CORRESPONDANTE

(30) Priorität: 09.05.2019 DE 102019112113
(43) Veröffentlichungstag der Anmeldung: 16.03.2022
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Eibensbach (DE); LAVALLÉE, Jerome, 72458 Albstadt (DE); BUBEK, Moritz, 71640 Ludwigsburg (DE); BEYL, Timo, 74354 Besigheim (DE); TANDLER, Daniel, 70469 Stuttgart (DE); BERNDT, Tobias, 71254 Ditzingen (DE); HERRE, Frank, 71739 Oberriexingen (DE); SOTZNY, Steffen, 71720 Oberstenfeld (DE)
(74) Vertreter: v. Bezold & Partner Patentanwälte - PartG mbB
(86) Internationale Anmeldenummer: PCT/EP2020/062240
(87) Internationale Veröffentlichungsnummer: WO 2020/225174

(56) Entgegenhaltungen:
- WO-A1-2010/046064
- DE-A1- 102010 019 612
- DE-A1- 102014 017 707
- DE-A1- 102016 014 944
- DE-A1- 19 854 760

## Beschreibung

Die Erfindung betrifft ein Beschichtungsverfahren zur Beschichtung eines Bauteils (z.B. Kraftfahrzeugkarosseriebauteil) mit einem Beschichtungsmittel (z.B. Lack). Weiterhin betrifft die Erfindung eine entsprechende Beschichtungsanlage.

In modernen Lackieranlagen zur Lackierung von Kraftfahrzeugkarosseriebauteilen werden als Applikationsgeräte üblicherweise Rotationszerstäuber eingesetzt, die einen räumlich ausgedehnten Sprühstrahl des zu applizierenden Lacks abgeben.

Eine neuere Entwicklungslinie sieht dagegen als Applikationsgeräte Düsenapplikatoren vor, die auch als Druckköpfe bezeichnet werden und beispielsweise in DE 10 2013 002 412 A1 beschrieben sind. Derartige Düsenapplikatoren geben im Gegensatz zu den bekannten Rotationszerstäubern keinen räumlich ausgedehnten Sprühstrahl des Lacks ab, sondern einen räumlich eng begrenzten Beschichtungsmittelstrahl. Dies hat den Vorteil, dass sich der applizierte Lack nahezu vollständig auf dem zu beschichtenden Bauteil ablagert und somit kaum oder kein Overspray anfällt. Ein weiterer Vorteil dieser bekannten Düsenapplikatoren besteht darin, dass auch Muster auf die Bauteiloberfläche aufgebracht werden können, wie beispielsweise Grafiken oder Schriftzüge. Allerdings besteht hierbei das Problem, dass die Konturen der Muster nicht randscharf sind.

Bei der Applikation eines Tröpfchenstrahls bilden die Beschichtungsmitteltröpfchen auf der Bauteiloberfläche zunächst kreisförmige Beschichtungen, die dann aufgrund der Kohäsionskraft des applizierten Lacks zu einem durchgehenden Beschichtungsmittelfilm zusammenlaufen. An der Außenkontur des Musters ist jedoch trotzdem eine Tröpfchenstruktur erkennbar, was störend ist.

Das gleiche Problem tritt in ähnlicher Form auf, wenn anstelle eines Tröpfchenstrahls ein Beschichtungsmittelstrahl appliziert wird, der in Strahlrichtung zusammenhängt. Hierbei bilden die Beschichtungsmittelstrahlen auf der Bauteiloberfläche zwar durchgehende Beschichtungsmittelbahnen, die üblicherweise nebeneinander liegen und dann aufgrund der Kohäsionskraft des applizierten Lacks zusammenlaufen. An den Bahnenden ist hierbei jedoch auch eine Struktur erkennbar, so dass die Kontur nicht an allen Seiten der Fläche bzw. des Musters randscharf ist.

Zum technischen Hintergrund der Erfindung ist auch hinzuweisen auf DE 198 54 760 A1, DE 10 2013 006 868 A1, EP 0 282 599 A1, DE 199 36 790 A1, EP 2 770 322 A1, FAVRE-BULLE, B.: "Automatisierung komplexer Industrieprozesse - Systeme, Verfahren und Informationsmanagement", Springer-Verlag GmbH, 2004, ISBN 978-3-7091-0562-7, DE 10 2016 014 944 A1, DE 10 2014 017 707 A1, DE 198 54 760 A1, WO 2010/046064 A1 und DE 101 50 826 A1.

Schließlich offenbart DE 10 2010 019 612 A1 ein Beschichtungsverfahren.

Dieses bekannte Beschichtungsverfahren ist jedoch noch nicht vollständig befriedigend.

Der Erfindung liegt deshalb die Aufgabe zugrunde, ein entsprechend verbessertes Beschichtungsverfahren und eine entsprechende Beschichtungsanlage zu schaffen.

Diese Aufgabe wird durch ein erfindungsgemäßes Beschichtungsverfahren bzw. eine entsprechende Beschichtungsanlage gemäß den unabhängigen Ansprüchen gelöst.

Das erfindungsgemäße Beschichtungsverfahren sieht zunächst vor, dass ein Muster festgelegt wird, das auf der Bauteiloberfläche des zu beschichtenden Bauteils erzeugt werden soll, wobei das Muster ein Oberflächenbereich ist, der von einer Kontur umrandet ist. Der im Rahmen der Erfindung verwendete Begriff eines Musters ist allgemein zu verstehen und umfasst beispielsweise Grafiken, Schriftzüge, Bilder, Buchstaben, Ziffern und andere mögliche Gestaltungen sowie Teilflächen eines Beschichtungsobjekts (z.B. Dachholm, Kotflügel, etc. einer Kraftfahrzeugkarosserie).

Das Muster wird in geeigneter Weise und mittels Hilfsmitteln, wie z.B. einer Software durch einen Bediener teilautomatisch oder vollautomatisch in die Konturanteile und die flächigen Anteil zerlegt. In einem weiteren Schritt werden aus den so ermittelten Informationen (Teilflächen) manuell, teilautomatisch oder vollautomatisch Bahnprogramme kreiert.

Weiterhin sieht das erfindungsgemäße Beschichtungsverfahren in Übereinstimmung mit den bekannten Beschichtungsverfahren vor, dass die Bauteiloberfläche innerhalb der vorgegebenen Kontur des gewünschten Musters flächig beschichtet wird, wobei vorzugsweise ein Düsenapplikator (z.B. Druckkopf) eingesetzt wird, wie er bereits vorstehend zum Stand der Technik erwähnt wurde.

Das erfindungsgemäße Beschichtungsverfahren zeichnet sich nun durch ein randscharfes Beschichten der Bauteiloberfläche mit einem Beschichtungsmittel entlang mindestens eines Teils der Kontur des Musters aus. Im Rahmen der Erfindung wird das Muster also innerhalb der Kontur flächig ausgefüllt, während die Kontur bzw. Teile der Kontur (z.B. vordere Abschlusskante) des Musters randscharf nachgezogen wird.

Hierbei ist zu erwähnen, dass im Rahmen der Erfindung verschiedene Reihenfolgen dieser beiden Beschichtungsschritte möglich sind. Eine Erfindungsvariante sieht vor, dass zunächst das flächige Beschichten der Bauteiloberfläche innerhalb der Kontur erfolgt, gefolgt von dem randscharfen Beschichten entlang der Kontur des Musters. Es ist jedoch alternativ auch möglich, dass erst die Kontur des Musters gezogen wird, gefolgt von dem flächigen Beschichten innerhalb der Kontur.

Weiterhin ist zu erwähnen, dass das flächige Beschichten innerhalb der Kontur des vorgegebenen Musters vorzugsweise mit einer größeren Flächenbeschichtungsleistung erfolgt als das randscharfe Beschichten entlang der Kontur. Der im Rahmen der Erfindung verwendete Begriff einer Flächenbeschichtungsleistung definiert hierbei die Größe der innerhalb einer bestimmten Zeiteinheit beschichteten Fläche auf dem Bauteil, d.h. das Verhältnis von beschichteter Fläche und erforderlicher Beschichtungsdauer.

Bei einem Düsenapplikator als Applikationsgerät kann diese Variation der Flächenbeschichtungsleistung beispielsweise durch Aktivierung oder Deaktivierung von mehreren Düsen des Düsenapplikators erfolgen. So kann das flächige Beschichten innerhalb der Kontur mit einer großen Anzahl von aktivierten Düsen erfolgen, wohingegen das randscharfe Beschichten entlang der Kontur des Musters mit einer geringeren Anzahl von aktivierten Düsen erfolgen kann. So kann das randscharfe Beschichten entlang der Kontur des Musters beispielsweise mit weniger als 20, 10, 5 oder sogar nur mit einer einzigen Düse des Düsenapplikators erfolgen.

Die Variation der Flächenbeschichtungsleistung für das flächige Beschichten einerseits und für das randscharfe Beschichten andererseits kann jedoch auch in anderer Weise erfolgen. Beispielsweise kann hierzu der Mengenstrom des applizierten Beschichtungsmittels verändert werden, wozu beispielsweise der Applikationsdruck variiert werden kann.

Weiterhin ist zu erwähnen, dass der Applikator (z.B. Düsenapplikator) bei dem erfindungsgemäßen Beschichtungsverfahren von einem Manipulator über die Bauteiloberfläche bewegt wird. Bei dem Manipulator handelt es sich vorzugsweise um einen mehrachsigen Beschichtungsroboter mit einer seriellen Roboterkinematik. Eine andere Möglichkeit eines Manipulators ist ein x-y- oder x-y-z-Linearachsensystem, bei dem der Applikator an einer der Achsen befestigt ist und die Achsen so an- und zueinander in Beziehung stehen, dass der Applikator an jede Stelle der zu beschichtenden Fläche bewegt werden kann.

Bei dem vorstehend erwähnten randscharfen Beschichten entlang der Kontur des Musters bewegt der Manipulator den Applikator mit einer bestimmten Verfahrgeschwindigkeit entlang der Kontur des Musters, wobei der Applikator einen bestimmten Mengenstrom des Beschichtungsmittels appliziert. In Abhängigkeit von der Form des Musters und der Form der Kontur ist es jedoch in der Regel nicht möglich, dass der Applikator mit einer konstanten Verfahrgeschwindigkeit über die Bauteiloberfläche bewegt wird. So muss der Applikator beispielsweise an Eckpunkten, allgemein an Punkten der Kontur mit unstetigem Richtungsverlauf, Wendepunkten oder Knickstellen abgebremst und wieder beschleunigt werden. Bei einem konstanten Mengenstrom des applizierten Beschichtungsmittels würde dies aufgrund der Variation der Verfahrgeschwindigkeit zu einer entsprechenden Variation der Schichtdicke auf der Bauteiloberfläche führen. Diese unerwünschten Variationen der Schichtdicke auf der Bauteiloberfläche können dadurch verhindert werden, dass der Mengenstrom des Beschichtungsmittels in Abhängigkeit von der Verfahrgeschwindigkeit entsprechend angepasst wird. So führt eine Verringerung der Verfahrgeschwindigkeit dann zu einer entsprechenden Verringerung des Mengenstroms des Beschichtungsmittels, während eine Erhöhung der Verfahrgeschwindigkeit auch eine entsprechende Erhöhung des Mengenstroms des Beschichtungsmittels erfordert.

Die vorstehend beschriebene Anpassung des Mengenstroms des Beschichtungsmittels in Abhängigkeit von der Verfahrgeschwindigkeit reicht jedoch nicht in allen Fällen aus, um eine konstante Schichtdicke auf der Bauteiloberfläche zu erreichen bzw. ist technisch nicht immer realisierbar. Beispielsweise kann ein Beschichtungsroboter mit einer seriellen Roboterkinematik rechtwinklige Knickstellen der Roboterbahn nur schwierig realisieren. Die Erfindung sieht deshalb vor, die Kontur nicht durchgehend abzufahren, sondern in mehreren Bahnabschnitten, die von dem Manipulator einfach abgefahren werden können, weil sie keine Ecken, Knickstellen oder Wendepunkte aufweisen. Zwischen den aufeinander folgenden Bahnabschnitten unterbricht dann der Applikator die Abgabe des Beschichtungsmittels und setzt während dieser Beschichtungspause zu dem nächsten Bahnabschnitt an.

Diese Unterteilung der abzufahrenden Kontur des Musters in mehrere aufeinander folgende Bahnabschnitte ist insbesondere an Problemstellen sinnvoll, wie beispielsweise Knickstellen der Kontur. Der im Rahmen der Erfindung verwendete Begriff einer Problemstelle stellt vorzugsweise darauf ab, dass der verwendete Manipulator die jeweilige Problemstelle ohne eine Unterbrechung nur mit einem starken Einbruch der Verfahrgeschwindigkeit passieren kann, beispielsweise mit einem Einbruch der Verfahrgeschwindigkeit von mehr als 50%, 70%, 80% oder 90%.

Abhängig vom Manipulator-Typ, von der Steifigkeit des Manipulators und/oder des Gesamtsystems aus Manipulator, Verfahrachse, Untergrund und/oder von den Fähigkeiten des Applikators können die möglichen Radien und/oder die Beschleunigungsstrecken unterschiedlich sein.

Soll das Bewegungsbahnprogramm des Manipulators automatisch erstellt werden, werden oben genannte Parameter in der dafür erforderlichen Software eingegeben bzw. gespeichert.

Weiterhin ist zu erwähnen, dass der Manipulator an den Problemstellen zwischen der Beschichtung der unmittelbar aufeinander folgenden Bahnabschnitte eine knickfreie Ansetzbewegung ausführt, um neu an dem unmittelbar folgenden Bahnabschnitt anzusetzen.

In einer Erfindungsvariante erfolgt das randscharfe Beschichten der Kontur mit einem Beschichtungsmittelstrahl, der in Strahllängsrichtung zusammenhängt und zwar vorzugsweise entlang der gesamten Kontur.

In einer anderen Erfindungsvariante erfolgt das randscharfe Beschichten der Kontur dagegen zunächst mit einem in Strahllängsrichtung zusammenhängenden Beschichtungsmittelstrahl und anschließend mit einem Tröpfchenstrahl, der aus zahlreichen Tröpfchen besteht, die in Strahllängsrichtung nicht zusammenhängen.

Das flächige Beschichten des Musters und/oder das randscharfe Beschichten der Kontur können im Rahmen der Erfindung abwechselnd mit einem in Strahllängsrichtung zusammenhängenden Beschichtungsmittelstrahl und mit einem Tröpfchenstrahl erfolgen, der aus zahlreichen Tröpfchen besteht, die in Strahllängsrichtung nicht zusammenhängen. Diese Abwechslung zwischen den verschiedenen Strahlformen (Tröpfchenstrahl oder zusammenhängender Strahl) kann zeitlich sein oder abwechselnd zwischen dem Muster innerhalb der Kontur und der Kontur selbst.

Es wurde bereits vorstehend kurz erwähnt, dass im Rahmen der Erfindung die Möglichkeit besteht, dass zuerst das Muster innerhalb der Kontur flächig aufgebracht wird und erst dann die Kontur nachgezeichnet wird. Hierbei besteht im Rahmen der Erfindung die Möglichkeit, dass nach der flächigen Beschichtung des Musters mittels eines Messsystems (z.B. optisches Messsystem) zunächst die räumliche Ausrichtung und Lage der zunächst noch unscharfen Kontur ermittelt wird, damit die Kontur dann passgenau nachgezogen werden kann.

Es besteht jedoch alternativ auch die Möglichkeit, dass zuerst die Kontur vorgezeichnet wird und dann das Muster innerhalb der Kontur flächig beschichtet wird. Hierbei besteht die Möglichkeit, dass nach dem Vorzeichnen der Kontur zunächst die räumliche Lage und Ausrichtung der Kontur mittels eines Messsystems ermittelt wird, damit die flächige Beschichtung des Musters innerhalb der vorgezeichneten Kontur dann passgenau erfolgen kann.

Das vorstehend erwähnte Messsystem kann hierbei an dem Manipulator angebracht sein und wird dann mit dem Manipulator bewegt. Es ist jedoch alternativ auch möglich, dass das Messsystem getrennt von dem Manipulator ortsfest angeordnet ist.

Vorzugsweise arbeitet das Messsystem optisch und verfügt hierzu über mindestens eine Kamera und eine Bildauswertungseinheit.

In einer Erfindungsvariante erfolgt das flächige Beschichten innerhalb der Kontur mit demselben Beschichtungsmittel wie das randscharfe Beschichten entlang der Kontur.

In einer anderen Erfindungsvariante werden jedoch hierfür unterschiedliche Beschichtungsmittel eingesetzt, insbesondere Beschichtungsmittel mit unterschiedlichen Farben.

Weiterhin besteht im Rahmen der Erfindung die Möglichkeit, dass das flächige Beschichten bei verschiedenen Mustern mit unterschiedlichen Beschichtungsmitteln erfolgt. Ferner besteht auch die Möglichkeit, dass das randscharfe Beschichten bei verschiedenen Konturen mit unterschiedlichen Beschichtungsmitteln erfolgt.

Es wurde bereits vorstehend kurz erwähnt, dass die auf das Bauteil aufgebrachten Beschichtungsmitteltröpfchen bzw. Beschichtungsmittelbahnen nach dem Applizieren aufgrund der Kohäsionskraft des Beschichtungsmittels zu einem durchgehenden Beschichtungsmittelfilm zusammenlaufen, was grundsätzlich erwünscht ist. Dieses Zusammenlaufen ist jedoch nur innerhalb einer bestimmten Verlaufzeit nach dem Aufbringen des Beschichtungsmittels möglich. Falls dasselbe Beschichtungsmittel für die Kontur und für die flächige Beschichtung verwendet wird, so ist es grundsätzlich wünschenswert, dass Kontur und Innenfläche zusammenlaufen. In diesem Fall erfolgt das flächige Beschichten des Musters und das randscharfe Beschichten entlang der Kontur vorzugsweise in einem Zeitabstand, der kürzer ist als die Verlaufzeit, damit das Beschichtungsmittel der Kontur und der Fläche zusammenlaufen kann.

Bei unterschiedlichen Beschichtungsmitteln für Kontur und Innenfläche und insbesondere bei verschieden farbigen Beschichtungsmitteln für Kontur und Innenfläche ist dieses Zusammenlaufen der Beschichtungsmittel dagegen gerade nicht erwünscht. In diesem Fall erfolgt das flächige Beschichten des Musters und das randscharfe Beschichten entlang der Kontur vorzugsweise in einem Zeitabstand, der größer ist als die Verlaufzeit, damit die unterschiedlichen Beschichtungsmittel der Kontur und der Innenfläche nicht zusammenlaufen.

Allgemein ist zu erwähnen, dass das Beschichtungsmittel vorzugsweise von einem Applikator appliziert wird, der keinen Sprühstrahl abgibt, sondern einen eng begrenzten Beschichtungsmittelstrahl. Bei dem Applikator kann es sich also um einen Druckkopf handeln, wie er an sich aus dem Stand der Technik grundsätzlich bekannt ist.

Der Beschichtungsmittelstrahl kann beispielsweise aus Beschichtungsmitteltröpfchen bestehen, die in Strahllängsrichtung voneinander getrennt sind. Alternativ besteht jedoch auch die Möglichkeit, dass der Beschichtungsmittelstrahl in Strahllängsrichtung zusammenhängt.

Es wurde bereits vorstehend kurz erwähnt, dass der Applikator vorzugsweise von einem Manipulator über die Bauteiloberfläche bewegt wird, wobei es sich vorzugsweise um einen mehrachsigen Beschichtungsroboter mit einer seriellen Roboterkinematik handelt oder um ein Linearachsensystem.

Vorteilhaft ist es hierbei, wenn der Manipulator eine hohe räumliche Positionierungsgenauigkeit und/oder Wiederholgenauigkeit aufweist, die vorzugsweise präziser ist als 5mm, 2mm oder sogar 0,5mm. Dies ist sinnvoll, damit die Kontur und die Innenfläche eines Musters passgenau zueinander appliziert werden können.

Hinsichtlich des Typs des applizierten Beschichtungsmittels ist die Erfindung nicht auf Lacke beschränkt, wie beispielsweise Einkomponentenlacke, Zweikomponentenlacke, wasserbasierte Lacke oder lösemittelbasierte Lacke. Vielmehr kann es sich bei dem Beschichtungsmittel auch um einen Klebstoff, einen Haftvermittler, einen Primer, ein pastöses Material, einen Dichtstoff oder einen Dämmstoff handeln.

Ferner ist zu erwähnen, dass das Beschichtungsmittel vorzugsweise mit einem bestimmten Applikationsabstand zwischen dem Applikator und der Bauteiloberfläche appliziert wird, wobei der Applikationsabstand vorzugsweise im Bereich von 1mm-80mm, 5mm-50mm oder 10mm-50mm liegt.

Weiterhin ist zu erwähnen, dass die Erfindung nicht nur Schutz beansprucht für das vorstehend beschriebene erfindungsgemäße Beschichtungsverfahren. Vielmehr beansprucht die Erfindung auch Schutz für eine entsprechende Beschichtungsanlage, die das erfindungsgemäße Beschichtungsverfahren ausführt.

So weist die erfindungsgemäße Beschichtungsanlage zunächst einen Applikator zur Applikation des Beschichtungsmittels auf, wobei es sich vorzugsweise um einen Düsenapplikator oder einen Drucckopf handelt.

Weiterhin umfasst die erfindungsgemäße Beschichtungsanlage einen Manipulator zur Bewegung des Applikators über die Bauteiloberfläche, wobei es sich vorzugsweise um einen mehrachsigen Beschichtungsroboter mit einer seriellen Roboterkinematik oder um eine Linearachseneinheit handelt.

Darüber hinaus umfasst die erfindungsgemäße Beschichtungsanlage ein Steuersystem zur Ansteuerung des Manipulators und des Applikators, wobei das Steuersystem Hardware-Komponenten und Software-Komponenten umfassen kann und auf verschiedene Bauteile und Komponenten verteilt werden kann. Das Steuersystem ist hierbei so ausgebildet, dass die Beschichtungsanlage das vorstehend beschriebene erfindungsgemäße Beschichtungsverfahren ausführt.

Die erfindungsgemäße Beschichtungsanlage kann hierzu auch das vorstehend bereits erwähnte Messsystem umfassen.

Schließlich beansprucht die Erfindung auch Schutz für ein entsprechendes Steuerprogramm, das bei einer Ausführung auf dem Steuersystem die Applikationsanlage veranlasst, das erfindungsgemäße Beschichtungsverfahren auszuführen. Das Steuerprogramm kann auf einem computerlesbaren Medium (z.B. Computerspeicher, USB-Stick, CDROM, DVD, Speicherkarte, etc.) gespeichert sein, so dass auch das computerlesbare Medium mit dem darauf gespeicherten Steuerprogramm geschützt ist.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine schematische Darstellung zur herkömmlichen Applikation eines Musters mit einem Düsenapplikator, der einen in Strahllängsrichtung zusammenhängenden Beschichtungsmittelstrahl abgibt,
- Figur 1B: das Muster gemäß Figur 1A nach dem Zusammenlaufen der Beschichtungsmittelbahnen auf der Bauteiloberfläche,
- Figur 2A: eine Abwandlung von Figur 1A für einen Düsenapplikator, der einen Tröpfchenstrahl abgibt,
- Figur 2B: eine Abwandlung von Figur 1B für den Düsenapplikator, der einen Tröpfchenstrahl abgibt,
- Fig. 3A-3D: verschiedene schematische Darstellungen zur erfindungsgemäßen Aufbringung eines Musters mit einem Düsenapplikator, der einen in Strahllängsrichtung zusammenhängenden Beschichtungsmittelstrahl abgibt,
- Fig. 4A-4D: Abwandlungen der Fig. 3A-3D für einen Düsenapplikator, der einen Tröpfchenstrahl abgibt,
- Figur 5: ein Flussdiagramm zur Verdeutlichung des erfindungsgemäßen Beschichtungsverfahrens, sowie
- Figur 6: eine stark vereinfachte schematische Darstellung einer erfindungsgemäßen Beschichtungsanlage.

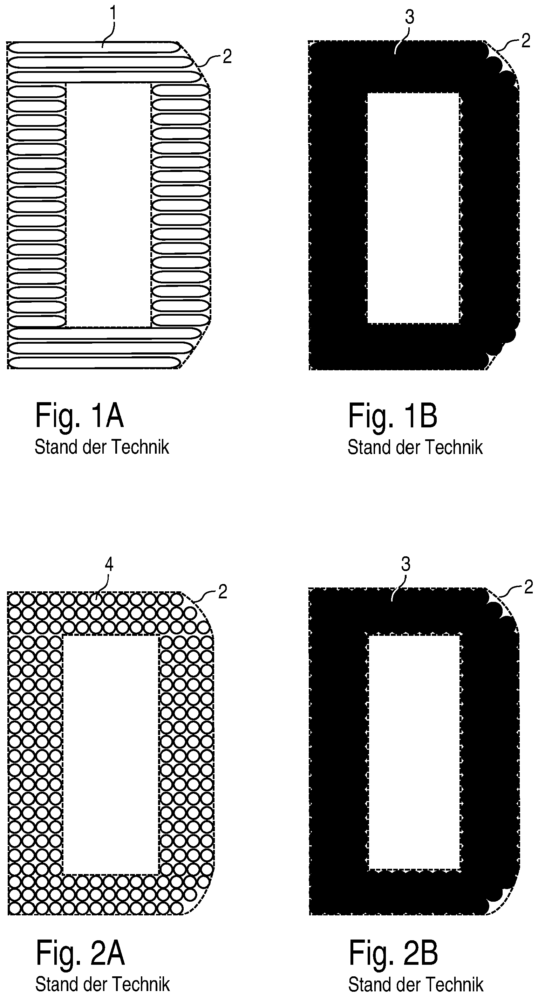

Die Figuren 1A und 1B zeigen schematische Darstellungen zur herkömmlichen Aufbringung eines Musters in Form des Buchstabens D auf eine Bauteiloberfläche eines Bauteils, wie beispielsweise eines Kraftfahrzeugkarosseriebauteils. Hierbei gibt ein Düsenapplikator einen in Strahllängsrichtung zusammenhängenden Beschichtungsmittelstrahl auf die Bauteiloberfläche auf, so dass auf der Bauteiloberfläche zunächst lang gestreckte Beschichtungsmittelbahnen 1 entstehen, die von einer Kontur 2 begrenzt sind. Nach dem Auftreffen auf die Bauteiloberfläche laufen die Beschichtungsmittelbahnen 1 dann aufgrund der Kohäsionskraft des applizierten Lacks zusammen und bilden dann ein zusammenhängendes Muster 3. Bei dieser bekannten Art der Musterapplikation sind jedoch entlang der Kontur 2 noch die Umrisse der Beschichtungsmittelbahnen 1 erkennbar. Die Kontur 2 ist hierbei also nicht besonders randscharf, was unerwünscht ist.

Die Figuren 2A und 2B zeigen entsprechende Darstellungen für die Musterapplikation mit einem Düsenapplikator, der einen Tröpfchenstrahl abgibt, d.h. einen Beschichtungsmittelstrahl, der aus Beschichtungsmitteltröpfchen besteht, die in Strahllängsrichtung nicht zusammenhängen.

Anstelle der Beschichtungsmittelbahnen 1 entstehen hierbei auf der Bauteiloberfläche Beschichtungsmitteltröpfchen 4, die dann ebenfalls aufgrund der Kohäsionskraft des applizierten Beschichtungsmittels zu dem durchgehenden Muster 3 zusammen laufen. Auch hierbei ist die Kontur 2 des Musters 3 jedoch nicht besonders randscharf.

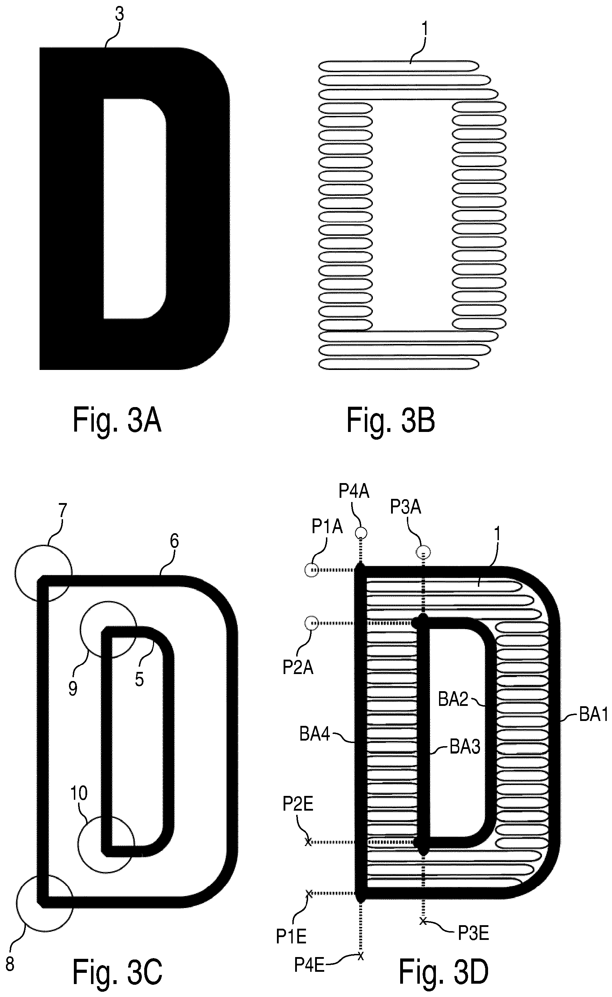

Die Figuren 3A-3D zeigen Darstellungen zur erfindungsgemäßen Musterapplikation, wobei diese Darstellungen grundsätzlich den Figuren 1A und 1B entsprechen, d.h. auch hierbei wird das Muster 3 von einem Düsenapplikator aufgebracht, der in Strahllängsrichtung zusammenhängende Beschichtungsmittelstrahlen abgibt, so dass auf der Bauteiloberfläche die Beschichtungsmittelbahnen 1 entstehen. Hierbei ist zu erwähnen, dass das Bezugszeichen 3 in Figur 3A das Wunschmuster bezeichnet, d.h. die Vorgabe, die in den ganzen Prozess eingeht.

Hierbei weist das Muster 3 eine Innenkontur 5 und eine Außenkontur 6 auf, die randscharf lackiert werden, um die gewünschte Randschärfe des Musters 3 zu erzeugen. Hierzu wird der Düsenapplikator entlang der Innenkontur 5 und entlang der Außenkontur 6 geführt und beschichtet dann die Innenkontur 5 bzw. die Außenkontur randscharf, wobei nur eine einzige Düse oder nur wenige Düsen des Düsenapplikators genutzt werden, um die gewünschte Randschärfe zu erreichen.

Die flächige Beschichtung des Musters 3 innerhalb der Kontur 2 erfolgt dann in einem separaten Bearbeitungsschritt, beispielsweise mit einer höheren Flächenbeschichtungsleistung.

Hierbei ist zu erwähnen, dass der Düsenapplikator von einem mehrachsigen Beschichtungsroboter mit einer seriellen Roboterkinematik über die Bauteiloberfläche geführt wird. Ein solcher Beschichtungsroboter ermöglicht zwar eine hochpräzise Positionierung des Düsenapplikators, jedoch sind Knickstellen mit einem Winkel (größer einem Grenzwinkel), insbesondere rechtwinklige, der Roboterbahn problematisch. So weist die Außenkontur 6 zwei Problemstellen 7, 8 auf, an denen die Außenkontur 6 eine rechteckige Knickstelle zeigt. Entsprechend weist auch die Innenkontur 5 Problemstellen 9, 10 auf, an denen die Innenkontur 5 eine rechteckige Knickstelle zeigt. Es ist deshalb mit einem Beschichtungsroboter mit einer seriellen Roboterkinematik nur schwer möglich, den Düsenapplikator exakt über die Problemstellen 7-10 zu führen, da die Verfahrgeschwindigkeit hierfür stark herabgesetzt (Grenzwert Null) werden müsste.

Das erfindungsgemäße Beschichtungsverfahren sieht deshalb vor, dass die Außenkontur 6 in zwei Bahnabschnitte BA1, BA4 aufgeteilt wird, wie auch die Innenkontur 5 in zwei Bahnabschnitte BA2, BA3 unterteilt wird. Bei der randscharfen Beschichtung der Außenkontur 6 wird zunächst der Bahnabschnitt BA1 lackiert und zwar ausgehend von einem Anfahrpunkt P1A und endend bei einem Abfahrpunkt P1E. Auf dem Bahnabschnitt BA1 treten keine großen Winkel (scharfen Knicke) auf, so dass der Beschichtungsroboter den Düsenapplikator mit einer nahezu konstanten Verfahrgeschwindigkeit entlang dem Bahnabschnitt BA1 führen kann.

Der Bahnabschnitt BA2 der Innenkontur 5 wird entsprechend ausgehend von einem Anfahrpunkt B2A und endend mit einem Abfahrpunkt P2E lackiert. Auch hierbei treten auf dem Bahnabschnitt BA2 keine Knickstellen auf, was eine nahezu konstante Verfahrgeschwindigkeit innerhalb des Bahnabschnitts BA2 ermöglicht.

Der Bahnabschnitt BA3 beginnt bei dem Anfahrpunkt P3A und endet bei dem Abfahrpunkt P3E und ist komplett linear, was ebenfalls eine konstante Verfahrgeschwindigkeit auf dem Bahnabschnitt BA3 ermöglicht.

Schließlich beginnt der Bahnabschnitt BA4 bei dem Anfahrpunkt P4A und endet bei dem Abfahrpunkt P4E. Auch der Bahnabschnitt BA4 ist vollständig linear und ermöglicht deshalb eine konstante Verfahrgeschwindigkeit.

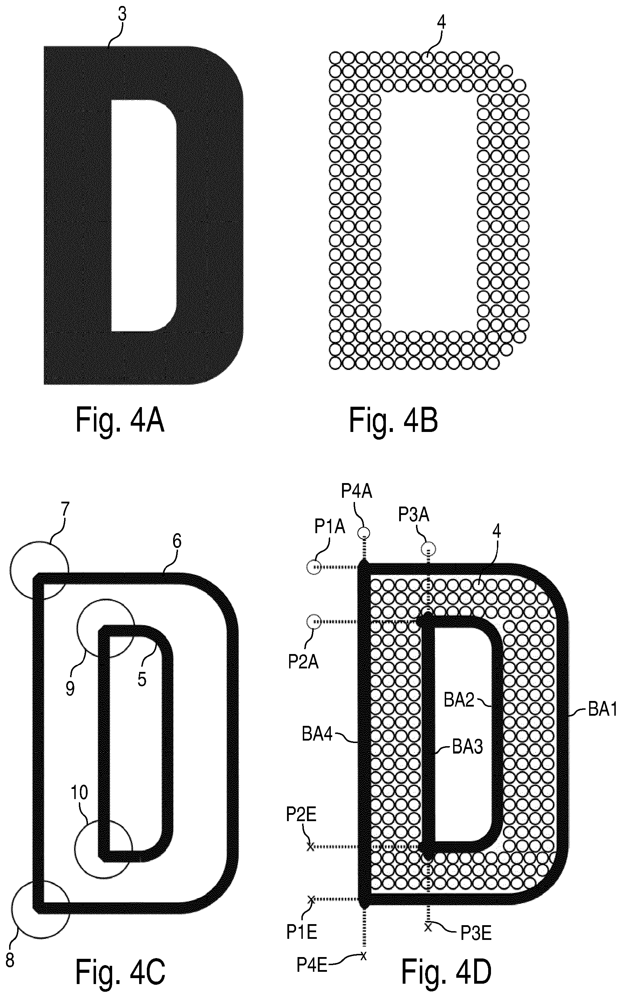

Die Figuren 4A-4D zeigen Abwandlungen der Figuren 3A-3D für einen Düsenapplikator, der einen Tröpfchenstrahl abgibt. Zur Vermeidung von Wiederholungen wird deshalb auf die Beschreibung zu den Figuren 3A-3D verwiesen.

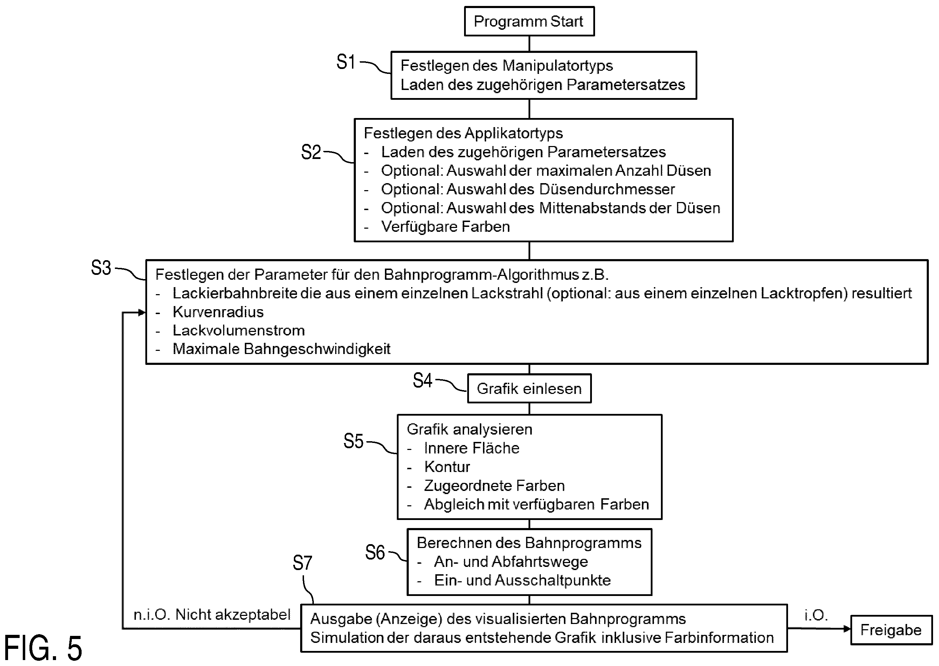

Figur 5 zeigt ein Flussdiagramm zur Verdeutlichung des erfindungsgemäßen Beschichtungsverfahrens.

Nach dem Programmstart wird zunächst in einem Schritt S1 der Manipulatortyp festgelegt, d.h. der Typ des verwendeten mehrachsigen Beschichtungsroboters oder beispielsweise der Typ des Linearachsensystems. In Abhängigkeit von dem Manipulatortyp wird dann ein zugehöriger Parametersatz geladen, der die Eigenschaften des jeweiligen Manipulators wiedergibt.

In einem Schritt S2 wird dann der Applikatortyp festgelegt und es wird ein entsprechender Parametersatz geladen, der die Eigenschaften des jeweiligen Applikatortyps wiedergibt, sowie optionale Parameter, wie beispielsweise den Abstand der Düsen, den Düsendurchmesser und die Anzahl der Düsen.

In einem Schritt S3 werden dann Parameter für einen Bahnprogramm-Algorithmus festgelegt, wie beispielsweise maximale und/oder minimale Lackierbahnbreite, minimal möglicher Kurvenradius, minimaler und/oder maximaler Lackvolumenstrom und maximale Bahngeschwindigkeit.

In einem Schritt S4 wird dann eine Grafik eingelesen, die als Muster appliziert werden soll.

In einem Schritt S5 wird die Grafik dann analysiert, beispielsweise hinsichtlich der inneren Fläche, der Kontur, der zugeordneten Farben und hinsichtlich des Abgleichs mit den verfügbaren Farben.

In einem Schritt S6 wird dann ein Bahnprogramm berechnet, das An- und Abfahrtswege sowie Ein- und Ausschaltpunkte definiert.

In einem Schritt S7 wird das Bahnprogramm dann visualisiert und es erfolgt eine Simulation des Bahnprogramms. Der Bediener des Programms kann daran anschließend das Ergebnis bewerten. Falls das Bahnprogramm nicht akzeptabel ist, so folgt eine entsprechende Anpassung in dem Schritt S3. Andernfalls wird das Bahnprogramm für eine Ansteuerung freigegeben.

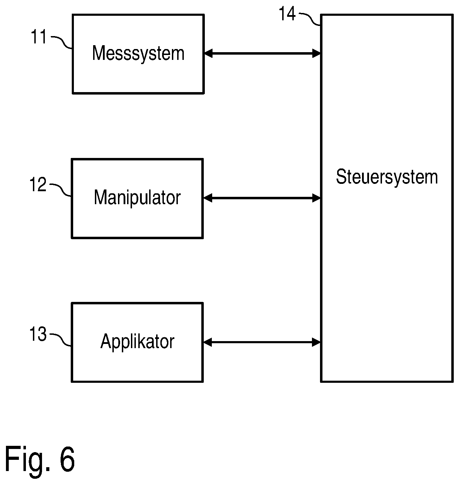

Figur 6 zeigt eine stark vereinfachte schematische Darstellung einer erfindungsgemäßen Beschichtungsanlage mit einem Messsystem 11, einem Manipulator 12, einem Applikator 13 und einem Steuersystem 14. Das Steuersystem 14 kann hierbei Hardware-Komponenten und Software-Komponenten aufweisen und auf verschiedene Bauteile und Komponenten verteilt sein.

Das Steuersystem 14 steuert den Manipulator12 und den Applikator 13 in der vorstehend beschriebenen Weise so an, dass das erfindungsgemäße Überwachungsverfahren ausgeführt wird.

Hierbei kann das Messsystem 11 die räumliche Lage und Ausrichtung der Kontur und der Innenfläche des Musters ermitteln, damit Kontur und Innenfläche passgenau zueinander appliziert werden können.

### Bezugszeichenliste:

- 1: Beschichtungsmittelbahnen
- 2: Kontur
- 3: Muster
- 4: Beschichtungsmitteltröpfchen
- 5: Innenkontur
- 6: Außenkontur
- 7, 8: Problemstellen der Außenkontur 6
- 9, 10: Problemstellen der Innenkontur 5
- 11: Messsystem
- 12: Manipulator
- 13: Applikator
- 14: Steuersystem
- BA1-BA4: Bahnabschnitte
- P1A-P4A: Anfahrpunkte
- P1E-P4E: Abfahrpunkte

## Patentansprüche

1. Beschichtungsverfahren zur Beschichtung eines Bauteils mit einem Beschichtungsmittel, mit den folgenden Schritten:
a) Festlegen eines Musters (3) auf der Bauteiloberfläche des zu beschichtenden Bauteils, wobei das Muster (3) ein Oberflächenbereich ist, der von einer Kontur (2; 5, 6) umrandet ist, und
b) Flächiges Beschichten der Bauteiloberfläche mit dem Beschichtungsmittel innerhalb der Kontur (2; 5, 6),
c) Randscharfes Beschichten der Bauteiloberfläche mit dem Beschichtungsmittel entlang mindestens eines Teils der Kontur (2; 5, 6) des Musters (3),
c1) wobei das randscharfe Beschichten entlang der Kontur (2; 5, 6) des Musters (3) mittels eines Applikators (13) erfolgt, der von einem Manipulator (12) entlang der Kontur (2; 5, 6) bewegt wird,
c2) wobei der Manipulator (12) den Applikator (13) bei dem randscharfen Beschichten entlang der Kontur (2; 5, 6) mit einer bestimmten Verfahrgeschwindigkeit über die Bauteiloberfläche bewegt und dabei die Kontur (2; 5, 6) abfährt,
**dadurch gekennzeichnet,**
d) **dass** der Manipulator (12) die Kontur (2; 5, 6) nicht durchgehend abfährt, sondern in mehreren Bahnabschnitten (BA1-BA4), und
e) **dass** der Applikator (13) die Abgabe des Beschichtungsmittels zwischen der Beschichtung der unmittelbar aufeinander folgenden Bahnabschnitte (BA1-BA4) der Kontur (2; 5, 6) unterbricht,
f) **dass** die unmittelbar aufeinander folgenden Bahnabschnitte (BA1-BA4) an Problemstellen (7-10) der Kontur (2; 5, 6) aneinander angrenzen, wobei sich die Problemstellen (7-10) dadurch auszeichnen, dass der Manipulator (12) die Problemstellen (7-10) ohne eine Unterbrechung nur mit einem starken Einbruch der Verfahrgeschwindigkeit passieren könnte, und
g) **dass** der Manipulator (12) an den Problemstellen (7-10) zwischen der Beschichtung der unmittelbar aufeinander folgenden Bahnabschnitte (BA1-BA4) eine knickfeie Ansetzbewegung ausführt, um neu an dem unmittelbar folgenden Bahnabschnitt anzusetzen.

2. Beschichtungsverfahren nach Anspruch 1,
**dadurch gekennzeichnet,**
a) **dass** das flächige Beschichten innerhalb der Kontur (2; 5, 6) mit einer größeren Flächenbeschichtungsleistung erfolgt als das randscharfe Beschichten entlang der Kontur (2; 5, 6), oder
b) **dass** der Applikator (13) mehrere Düsen aufweist, die einzeln oder gruppenweise für eine Beschichtung aktivierbar oder deaktivierbar sind, und dass bei der flächigen Beschichtung innerhalb der Kontur (2; 5, 6) eine größere Anzahl von Düsen für die Beschichtung aktiviert wird als bei dem randscharfen Beschichten entlang der Kontur (2; 5, 6), und dass bei dem randscharfen Beschichten entlang der Kontur (2; 5, 6) vorzugsweise weniger als 20, 10, 5 oder nur eine einzige Düse des Applikators (13) für die Beschichtung aktiviert wird.

3. Beschichtungsverfahren nach einem der vorhergehenden Ansprüche,
**dadurch gekennzeichnet,**
a) **dass** der Applikator (13) das Beschichtungsmittel bei dem randscharfen Beschichten entlang der Kontur (2; 5, 6) mit einem bestimmten Mengenstrom appliziert, und
b) **dass** bei dem randscharfen Beschichten entlang der Kontur (2; 5, 6)
b1) der Mengenstrom des Beschichtungsmittels in Abhängigkeit von der Verfahrgeschwindigkeit angepasst wird, um eine möglichst konstante Schichtdicke auf der Bauteiloberfläche zu erreichen, oder
b2) der Mengenstrom des Beschichtungsmittels konstant bleibt.

4. Beschichtungsverfahren nach einem der vorhergehenden Ansprüche,
**dadurch gekennzeichnet,**
a) **dass** das randscharfe Beschichten der Kontur (2; 5, 6) mit einem Beschichtungsmittelstrahl erfolgt, der in Strahllängsrichtung zusammenhängt, oder dass das randscharfe Beschichten der Kontur (2; 5, 6) zunächst mit einem in Strahllängsrichtung zusammenhängenden Beschichtungsmittelstrahl erfolgt und anschließend mit einem Tröpfchenstrahl, der aus zahlreichen Tröpfchen besteht, die in Strahllängsrichtung nicht zusammenhängen, oder
b) **dass** das flächige Beschichten des Musters (3) und das randscharfe Beschichten der Kontur (2; 5, 6) abwechselnd mit einem in Strahllängsrichtung zusammenhängenden Beschichtungsmittelstrahl und mit einem Tröpfchenstrahl erfolgt, der aus zahlreichen Tröpfchen besteht, die in Strahllängsrichtung nicht zusammenhängen, und zwar
b1) zeitlich abwechselnd oder
b2) abwechselnd zwischen dem Muster (3) und der Kontur (2; 5, 6).

5. Beschichtungsverfahren nach einem der vorhergehenden Ansprüche,
**gekennzeichnet durch** folgende Schritte:
a) dass zuerst das Muster (3) und erst dann die Kontur (2; 5, 6) beschichtet wird, oder
b) dass zuerst die Kontur (2; 5, 6) und dann das Muster (3) beschichtet wird.

6. Beschichtungsverfahren nach einem der vorhergehenden Ansprüche,
**gekennzeichnet durch** folgende Schritte:
a) dass zuerst das Muster (3) und erst dann die Kontur (2; 5, 6) beschichtet wird, und dass das auf die Bauteiloberfläche aufgebrachte Muster (3) mittels eines Messsystems (11) hinsichtlich seiner räumlichen Lage und Ausdehnung erfasst wird, um nach dem flächigen Beschichten des Musters (3) die Kontur (2; 5, 6) zu ermitteln oder
b) dass zuerst die Kontur (2; 5, 6) und dann das Muster (3) beschichtet wird, und dass die auf die Bauteiloberfläche aufgebrachte Kontur (2; 5, 6) mittels eines Messsystems (11) erfasst wird, um die flächige Ausdehnung des Musters (3) zu ermitteln.

7. Beschichtungsverfahren nach Anspruch 6,
**dadurch gekennzeichnet,**
a) **dass** das Messsystem (11) an dem Manipulator (12) angebracht ist und mit dem Manipulator (12) bewegt wird, oder
b) **dass** das Messsystem (11) getrennt von dem Manipulator (12) ortsfest angeordnet ist.

8. Beschichtungsverfahren nach einem der vorhergehenden Ansprüche,
**dadurch gekennzeichnet,**
a) **dass** das flächige Beschichten innerhalb der Kontur (2; 5, 6) mit einem anderen Beschichtungsmittel erfolgt als das randscharfe Beschichten entlang der Kontur (2; 5, 6), und/oder
b) **dass** das flächige Beschichten bei verschiedenen Mustern (3) mit unterschiedlichen Beschichtungsmitteln erfolgt, und/oder
c) **dass** das randscharfe Beschichten bei verschiedenen Konturen (2; 5, 6) mit unterschiedlichen Beschichtungsmitteln erfolgt.

9. Beschichtungsverfahren nach einem der vorhergehenden Ansprüche,
**dadurch gekennzeichnet,**
a) **dass** das Beschichtungsmittel nach dem Auftragen auf die Bauteiloberfläche nur innerhalb einer bestimmten Verlaufzeit verlaufen kann, um auf der Bauteiloberfläche eine flächig durchgehende Beschichtung zu bilden, und
b) **dass** das flächige Beschichten des Musters (3) und das randscharfe Beschichten entlang der angrenzenden Kontur (2; 5, 6) in einem Zeitabstand erfolgt, der kürzer ist als die Verlaufzeit, damit das Beschichtungsmittel der Kontur (2; 5, 6) und der Fläche zusammenlaufen kann.

10. Beschichtungsverfahren nach einem der Ansprüche 1 bis 8,
**dadurch gekennzeichnet,**
a) **dass** das flächige Beschichten innerhalb der Kontur (2; 5, 6) mit einem anderen Beschichtungsmittel erfolgt als das randscharfe Beschichten entlang der Kontur (2; 5, 6), und
b) **dass** das Beschichtungsmittel nach dem Auftragen auf die Bauteiloberfläche nur innerhalb eines bestimmten Verlaufzeit verlaufen kann, um auf der Bauteiloberfläche eine flächig durchgehende Beschichtung zu bilden, und
c) **dass** das flächige Beschichten des Musters (3) und das randscharfe Beschichten entlang der angrenzenden Kontur (2; 5, 6) in einem Zeitabstand erfolgt, der größer ist als die Verlaufzeit, damit die unterschiedlichen Beschichtungsmittel der Kontur (2; 5, 6) und der Fläche nicht zusammenlaufen.

11. Beschichtungsverfahren nach einem der vorhergehenden Ansprüche,
**dadurch gekennzeichnet,**
a) **dass** der Applikator (13) keinen Sprühstrahl abgibt, sondern einen eng begrenzten Beschichtungsmittelstrahl, und/oder
b) **dass** der Beschichtungsmittelstrahl
b1) aus Beschichtungsmitteltröpfchen besteht, die in Strahllängsrichtung voneinander getrennt sind, oder
b2) in Strahllängsrichtung zusammenhängt, und/oder
c) **dass** der Manipulator (12) eine räumliche Positionierungsgenauigkeit und/oder Wiederholgenauigkeit aufweist, die präziser ist als 5mm, 2mm oder 0,5mm, und/oder
d) **dass** das Beschichtungsmittel ein Lack ist, und/oder
e) **dass** das Beschichtungsmittel mit einem bestimmten Applikationsabstand zwischen dem Applikator (13) und der Bauteiloberfläche appliziert wird, wobei der Applikationsabstand 1mm-80mm, 5mm-50mm oder 10mm-25mm beträgt.

12. Beschichtungsverfahren nach einem der vorhergehenden Ansprüche,
**gekennzeichnet durch** mindestens einen der folgenden Schritte:
a) Festlegen des Typs des Manipulators zur Führung des Applikators,
b) Auslesen eines manipulatorspezifischen Parametersatzes aus einem Speicher, wobei der manipulatorspezifische Parametersatz Eigenschaften des Manipulators wiedergibt,
c) Festlegen eines Typs des Applikators,
d) Auslesen eines applikatorspezifischen Parametersatzes aus einem Speicher, wobei der applikatorspezifische Parametersatz Eigenschaften des Applikators wiedergibt,
e) Festlegen eines bahnprogrammspezifischen Parametersatzes, wobei der bahnprogrammspezifischen Parametersatzes Eigenschaften einer Roboterbahn definiert,
f) Auslesen des Musters aus einem Speicher,
g) Analyse des ausgelesenen Musters zur Ermittlung der Kontur,
h) Berechnen eines Bahnprogramms,
i) Visualisierung des Bahnprogramms.

13. Beschichtungsanlage zur Beschichtung eines Bauteils mit einem Beschichtungsmittel, mit
a) einem Applikator (13) zur Applikation des Beschichtungsmittels,
b) einem Manipulator (12) zur Bewegung des Applikators (13) über die Bauteiloberfläche, und
c) einem Steuersystem (14) zur Ansteuerung des Manipulators (12) und des Applikators (13), **dadurch gekennzeichnet,**
d) **dass** das Steuersystem (14) konfiguriert ist, das Beschichtungsverfahren nach einem der vorhergehenden Ansprüche aus zu führen.

14. Beschichtungsanlage nach Anspruch 13, **gekennzeichnet durch** ein Messsystem (11) zur Erfassung der räumlichen Lage und der Ausdehnung des Musters (3) und/oder der Kontur (2; 5, 6), wobei das Messsystem (11) mit dem Steuersystem (14) in Signalverbindung steht.

15. Computerlesbares Medium mit einem darauf gespeicherten Computerprogramm, das bei einer Ausführung auf einem Steuersystem einer Applikationsanlage die Applikationsanlage veranlasst, das Beschichtungsverfahren nach einem der Ansprüche 1 bis 12 auszuführen.

## Claims

1. Coating method for coating a component with a coating agent, having the following steps:
a) defining a pattern (3) on the component surface of the component to be coated, the pattern (3) being a surface region which is bordered by a contour (2; 5, 6), and
b) areal coating the component surface with the coating agent within the contour (2; 5, 6),
c) sharp-edged coating of the component surface with the coating agent along at least part of the contour (2; 5, 6) of the pattern (3),
c1) wherein the sharp-edged coating along the contour (2; 5, 6) of the pattern (3) is carried out by means of an applicator (13) which is moved along the contour (2; 5, 6) by a manipulator (12),
c2) wherein the manipulator (12) moves the applicator (13) along the contour (2; 5, 6) at a specific speed over the component surface during the sharp-edged coating, and
**characterized in**
d) **that** the manipulator (12) does not traverse the contour (2; 5, 6) contiguously, but in several path sections (BA1-BA4), and
e) **that** the applicator (13) interrupts the delivery of the coating agent between the coating of the immediately successive path sections (BA1-BA4) of the contour (2; 5, 6).
f) **that** the directly successive path sections (BA1-BA4) adjoin one another at problem points (7-10) of the contour (2; 5, 6), the problem points (7-10) being **characterized in that** the manipulator (12) could pass the problem points (7-10) without an interruption only with a sharp drop in the traversing speed, and
g) that the manipulator (12) executes a kink-free start movement at the problem points (7-10) between the coating of the immediately successive path sections (BA1-BA4) in order to start again at the immediately successive path section.

2. Coating method according to claim 1, **characterized in**
a) **that** the areal coating within the contour (2; 5, 6) is carried out with a greater area coating performance than the sharp-edged coating along the contour (2; 5, 6), or
b) **that** the applicator (13) has a plurality of nozzles which can be activated or deactivated individually or in groups for coating, and that for the areal coating within the contour (2; 5, 6), a larger number of nozzles are activated for the coating than in the case of sharp-edged coating along the contour (2; 5, 6), and that for the sharp-edged coating along the contour (2; 5, 6), preferably fewer than 20, 10, 5 or only a single nozzle of the applicator (13) is activated for the coating.

3. Coating method according to one of the preceding claims, **characterized in**
a) **that** the applicator (13) applies the coating agent during the sharp-edged coating along the contour (2; 5, 6) with a certain flow rate, and
b) **that** during the sharp-edged coating along the contour (2; 5, 6)
b1) the flow rate of the coating agent is adjusted as a function of the traversing speed in order to achieve a coating thickness on the component surface which is as constant as possible, or
b2) the flow rate of the coating agent remains constant.

4. Coating method according to one of the preceding claims, **characterized in**
a) **that** the sharp-edged coating of the contour (2; 5, 6) is carried out with a coating agent jet which is contiguous in the longitudinal direction of the jet, or that the sharp-edged coating of the contour (2; 5, 6) is first carried out with a coating agent jet which is contiguous in the longitudinal direction of the jet and then with a droplet jet which consists of numerous droplets which are not contiguous in the longitudinal direction of the jet, or
b) **that** the areal coating of the pattern (3) and the sharp-edged coating of the contour (2; 5, 6) are carried out alternately with a coating agent jet which is contiguous in the longitudinal direction of the jet and with a droplet jet which consists of numerous droplets which are not contiguous in the longitudinal direction of the jet, and in fact
b1) alternating in time or
b2) alternately between the pattern (3) and the contour (2; 5, 6).

5. Coating method according to any of the preceding claims,
**characterized by** the following steps:
a) that first the pattern (3) and only then the contour (2; 5, 6) is coated, or
b) that first the contour (2; 5, 6) and then the pattern (3) is coated.

6. Coating method according to one of the preceding claims,
**characterized by** the following steps:
a) that first the pattern (3) and only then the contour (2; 5, 6) is coated, and that the pattern (3) applied to the component surface is detected with respect to its spatial position and extent by means of a measuring system (11), in particular by means of an optical measuring system (11), in order to determine the contour (2; 5, 6) after the areal coating of the pattern (3), or
b) that first the contour (2; 5, 6) and then the pattern (3) is coated, and that the contour (2; 5, 6) applied to the component surface is detected by means of a measuring system (11), in particular by means of an optical measuring system (11), in order to determine the areal extent of the pattern (3).

7. Coating method according to claim 6, **characterized in**
a) **that** the measuring system (11) is attached to the manipulator (12) and is moved with the manipulator (12), or
b) **that** the measuring system (11) is arranged separately from the manipulator (12) in a stationary manner.

8. Coating method according to one of the preceding claims, **characterized in**
a) **that** the areal coating within the contour (2; 5, 6) is carried out with a different coating agent than the sharp-edged coating along the contour (2; 5, 6), and/or
b) **that** the areal coating of different patterns (3) is carried out with different coating means, and/or
c) **that** the sharp-edged coating of different contours (2; 5, 6) is carried out with different coating means, in particular with differently colored coating means.

9. Coating method according to one of the preceding claims, **characterized in**
a) **that** the coating agent, after application to the component surface, can only run within a certain running time in order to form a two-dimensional contiguous coating on the component surface, and
b) **that** the areal coating of the pattern (3) and the sharp-edged coating along the adjacent contour (2; 5, 6) are effected at a time interval which is shorter than the travel time so that the coating agent of the contour (2; 5, 6) and of the surface can run together.

10. Coating method according to one of claims 1 to 8, **characterized in**
a) **that** the areal coating within the contour (2; 5, 6) is carried out with a different coating agent than the sharp-edged coating along the contour (2; 5, 6), and
b) **that** the coating agent, after application to the component surface, can only run within a certain flow time in order to form a contiguous coating over the entire area of the component surface, and
c) **that** the areal coating of the pattern (3) and the sharp-edged coating along the adjacent contour (2; 5, 6) are carried out at a time interval which is greater than the travel time, so that the different coating agents of the contour (2; 5, 6) and of the surface do not run together.

11. Coating method according to any one of the preceding claims, **characterized in**
a) **that** the applicator (13) does not emit a spray jet but a narrowly limited coating agent jet, and/or
b) **that** the coating agent jet
b1) consists of coating agent droplets which are separated from one another in the longitudinal direction of the jet, or
b2) is contiguous in the longitudinal direction of the jet, and/or
c) **that** the manipulator (12) has a spatial positioning accuracy and/or repeatability accuracy which is more precise than 5mm, 2mm or 0.5mm, and/or
d) **that** the coating agent is a paint, and/or
e) **that** the coating agent is applied with a certain application distance between the applicator (13) and the component surface, wherein the application distance is 1mm-80mm, 5mm-50mm or 10mm-25mm.

12. Coating method according to any one of the preceding claims,
**characterized by** at least one of the following steps:
a) determining the type of the manipulator for guiding the applicator,
b) reading out a manipulator-specific parameter set from a memory, the manipulator-specific parameter set representing properties of the manipulator,
c) defining a type of applicator,
d) reading an applicator-specific parameter set from a memory, the applicator-specific parameter set representing properties of the applicator,
e) defining a path program-specific parameter set, the path program-specific parameter set defining properties of a robot path,
f) reading of the pattern from a memory,
g) analysis of the read out pattern to determine the contour,
h) calculation of a path program,
i) visualization of the path program.

13. Coating installation for coating a component with a coating agent, having
a) an applicator (13) for applying the coating agent,
b) a manipulator (12) for moving the applicator (13) over the component surface, and
c) a control system (14) for controlling the manipulator (12) and the applicator (13),
**characterized in**
d) **that** the control system (14) is configued to execute the coating method according to one of the preceding claims.

14. Coating installation according to claim 13, **characterized by** a measuring system (11) for detecting the spatial position and the extent of the pattern (3) and/or the contour (2; 5, 6), the measuring system (11) being in signal connection with the control system (14).

15. Computer-readable medium, with a computer program stored thereon which, when executed on a control system of an application system, causes the application system to execute the coating method according to one of claims 1 to 12.

## Revendications

1. Procédé de revêtement d'un composant avec un produit de revêtement, comprenant les étapes suivantes :
a) définition d'un motif (3) sur la surface du composant à revêtir, le motif (3) étant une zone de surface délimitée par un contour (2 ; 5, 6) ;
b) revêtement en surface de la surface du composant avec le produit de revêtement à l'intérieur du contour (2 ; 5, 6) ;
c) revêtement de manière nette des bords de la surface du composant avec le produit de revêtement le long d'au moins une partie du contour (2 ; 5, 6) du motif (3) ;
c1) le revêtement net des bords le long du contour (2 ; 5, 6) du motif (3) est réalisé au moyen d'un applicateur (13) qui est déplacé par un manipulateur (12) le long du contour (2 ; 5, 6) ;
c2) le manipulateur (12) déplace l'applicateur (13) sur la surface du composant à une vitesse de déplacement déterminée lors du revêtement net des bords le long du contour (2 ; 5, 6) et suit ainsi le contour (2 ; 5, 6) ;
**caractérisé en ce que** :
d) le manipulateur (12) ne parcourt pas le contour (2 ; 5, 6) en continu, mais en plusieurs sections de trajectoire (BA1-BA4) ; et
e) l'applicateur (13) interrompt la délivrance de le produit de revêtement entre le revêtement des sections de trajectoire (BA1-BA4) immédiatement consécutives du contour (2 ; 5, 6) ;
f) les sections de trajectoire (BA1-BA4) immédiatement consécutives sont adjacentes les unes aux autres au niveau des points problématiques (7-10) du contour (2 ; 5, 6), les points problématiques (7-10) étant **caractérisés par le fait que** le manipulateur (12) ne pourrait passer les points problématiques (7-10) sans interruption qu'avec une forte chute de la vitesse de déplacement ; et
g) le manipulateur (12) effectue un mouvement d'approche sans à-coups aux points problématiques (7-10) entre le revêtement des sections de trajectoire (BA1-BA4) immédiatement consécutives, afin de reprendre la nouvelle section de trajectoire immédiatement suivante.

2. Procédé de revêtement selon la revendication 1, **caractérisé en ce que** :
a) le revêtement en surface à l'intérieur du contour (2 ; 5, 6) est effectué avec une capacité de revêtement de surface supérieure à celle du revêtement net des bords le long du contour (2 ; 5, 6) ; ou
b) l'applicateur (13) a plusieurs buses qui peuvent être activées ou désactivées individuellement ou par groupes pour un revêtement, et qu'un plus grand nombre de buses est activé pour le revêtement lors du revêtement en surface à l'intérieur du contour (2 ; 5, 6) que lors du revêtement net des bords le long du contour (2 ; 5, 6), et que lors du revêtement net des bords le long du contour (2 ; 5, 6), de préférence moins de 20, 10, 5 ou une seule buse de l'applicateur (13) est activée pour le revêtement.

3. Procédé de revêtement selon l'une des revendications précédentes, **caractérisé en ce que** :
a) l'applicateur (13) applique le produit de revêtement lors du revêtement net des bords le long du contour (2 ; 5, 6) avec un débit massique déterminé ; et
b) lors du revêtement net des bords le long du contour (2 ; 5, 6) :
b1) le débit massique de le produit de revêtement est ajusté en fonction de la vitesse de déplacement afin d'obtenir une épaisseur de couche aussi constante que possible sur la surface du composant ; ou
b2) le débit massique de le produit de revêtement reste constant.

4. Procédé de revêtement selon l'une des revendications précédentes, **caractérisé en ce que** :
a) le revêtement net des bords du contour (2 ; 5, 6) est effectué avec un jet d'produit de revêtement continu dans le sens longitudinal du jet, ou le revêtement net des bords du contour (2 ; 5, 6) est d'abord effectué avec un jet d'produit de revêtement continu dans le sens longitudinal du jet, puis avec un jet de gouttelettes composé de nombreuses gouttelettes qui ne sont pas continues dans le sens longitudinal du jet ; ou
b) le revêtement en surface du motif (3) et le revêtement net des bords du contour (2 ; 5, 6) sont effectués alternativement avec un jet d'produit de revêtement continu dans le sens longitudinal du jet et avec un jet de gouttelettes composé de nombreuses gouttelettes qui ne sont pas continues dans le sens longitudinal du jet, et ce :
b1) alternativement dans le temps ; ou
b2) alternativement entre le motif (3) et le contour (2 ; 5, 6).

5. Procédé de revêtement selon l'une des revendications précédentes, **caractérisé par** les étapes suivantes :
a) le motif (3) est revêtu en premier, puis le contour (2 ; 5, 6) ; ou
b) le contour (2 ; 5, 6) est revêtu en premier, puis le motif (3).

6. Procédé de revêtement selon l'une des revendications précédentes, **caractérisé par** les étapes suivantes :
a) le motif (3) est revêtu en premier, puis le contour (2 ; 5, 6), et le motif (3) appliqué sur la surface du composant est détecté au moyen d'un système de mesure (11) en ce qui concerne sa position spatiale et son étendue, afin de déterminer le contour (2 ; 5, 6) après le revêtement en surface du motif (3) ; ou
b) le contour (2 ; 5, 6) est revêtu en premier, puis le motif (3), et le contour (2 ; 5, 6) appliqué sur la surface du composant est détecté au moyen d'un système de mesure (11) afin de déterminer l'étendue superficielle du motif (3).

7. Procédé de revêtement selon la revendication 6, **caractérisé en ce que** :
a) le système de mesure (11) est fixé au manipulateur (12) et est déplacé avec le manipulateur (12) ; ou
b) le système de mesure (11) est disposé à un emplacement fixe, séparément du manipulateur (12).

8. Procédé de revêtement selon l'une des revendications précédentes, **caractérisé en ce que** :
a) le revêtement en surface à l'intérieur du contour (2 ; 5, 6) est effectué avec un produit de revêtement différent de celui utilisé pour le revêtement net des bords le long du contour (2 ; 5, 6) ; et/ou
b) le revêtement en surface est effectué avec des produits de revêtement différents pour différents motifs (3) ; et/ou
c) le revêtement net des bords est effectué avec des produits de revêtement différents pour différents contours (2 ; 5, 6).

9. Procédé de revêtement selon l'une des revendications précédentes, **caractérisé en ce que** :
a) le produit de revêtement, après application sur la surface du composant, ne peut s'étaler que pendant un certain temps d'écoulement afin de former un revêtement continu en surface sur la surface du composant ; et
b) le revêtement en surface du motif (3) et le revêtement net des bords le long du contour (2 ; 5, 6) adjacent sont effectués à un intervalle de temps plus court que le temps d'écoulement, afin que le produit de revêtement du contour (2 ; 5, 6) et de la surface puisse fusionner.

10. Procédé de revêtement selon l'une des revendications 1 à 8, **caractérisé en ce que** :
a) le revêtement en surface à l'intérieur du contour (2 ; 5, 6) est effectué avec un produit de revêtement différent de celui utilisé pour le revêtement net des bords le long du contour (2 ; 5, 6) ; et
b) le produit de revêtement, après application sur la surface du composant, ne peut s'étaler que pendant un certain temps d'écoulement afin de former un revêtement continu en surface sur la surface du composant ; et
c) le revêtement en surface du motif (3) et le revêtement net des bords le long du contour (2 ; 5, 6) adjacent sont effectués à un intervalle de temps plus long que le temps d'écoulement, afin que les différents produits de revêtement du contour (2 ; 5, 6) et de la surface ne fusionnent pas.

11. Procédé de revêtement selon l'une des revendications précédentes, **caractérisé en ce que** :
a) l'applicateur (13) ne délivre pas un jet pulvérisé, mais un jet d'produit de revêtement étroitement délimité ; et/ou
b) le jet d'un produit de revêtement :
b1)est constitué de gouttelettes d'produit de revêtement séparées les unes des autres dans le sens longitudinal du jet ; ou
b2) est continu dans le sens longitudinal du jet ; et/ou
c) le manipulateur (12) présente une précision de positionnement spatial et/ou une répétabilité qui est plus précise que 5 mm, 2 mm ou 0,5 mm ; et/ou
d) le produit de revêtement est une laque ; et/ou
e) le produit de revêtement est appliqué avec une distance d'application déterminée entre l'applicateur (13) et la surface du composant, la distance d'application étant de 1 mm à 80 mm, 5 mm à 50 mm ou 10 mm à 25 mm.

12. Procédé de revêtement selon l'une des revendications précédentes, **caractérisé par** au moins l'une des étapes suivantes :
a) définition du type du manipulateur pour guider l'applicateur ;
b) lecture d'un ensemble de paramètres spécifiques au manipulateur à partir d'une mémoire, l'ensemble de paramètres spécifiques au manipulateur décrivant les propriétés du manipulateur ;
c) définition d'un type d'applicateur ;
d) lecture d'un ensemble de paramètres spécifiques à l'applicateur à partir d'une mémoire, l'ensemble de paramètres spécifiques à l'applicateur décrivant les propriétés de l'applicateur ;
e) définition d'un ensemble de paramètres spécifiques au programme de trajectoire, l'ensemble de paramètres spécifiques au programme de trajectoire définissant les propriétés d'une trajectoire de robot ;
f) lecture du motif à partir d'une mémoire ;
g) analyse du motif lu pour déterminer le contour ;
h) calcul d'un programme de trajectoire ;
i) visualisation du programme de trajectoire.

13. Installation de revêtement pour le revêtement d'un composant avec un produit de revêtement, comprenant :
a) un applicateur (13) pour l'application de le produit de revêtement ;
b) un manipulateur (12) pour le déplacement de l'applicateur (13) sur la surface du composant ; et
c) un système de commande (14) pour la commande du manipulateur (12) et de l'applicateur (13) ;
**caractérisée en ce que** :
d) le système de commande (14) est configuré pour exécuter le procédé de revêtement selon l'une des revendications précédentes.

14. Installation de revêtement selon la revendication 13, **caractérisée par** un système de mesure (11) pour la détection de la position spatiale et de l'étendue du motif (3) et/ou du contour (2 ; 5, 6), le système de mesure (11) étant en liaison de signal avec le système de commande (14).

15. Support lisible par ordinateur avec un programme informatique y étant stocké, qui, lors de son exécution sur un système de commande d'une installation d'application, amène l'installation d'application à exécuter le procédé de revêtement selon l'une des revendications 1 à 12.
